# EUROPEAN PATENT APPLICATION

(11) **EP 4 568 260 A1**
(43) Date of publication of application: **11.06.2025**
(21) Application number: 22955071.0
(22) Date of filing: 08.08.2022
(51) Int. Cl.: H04N 21/45, H04N 21/485, H04N 21/436, H04N 21/4363

(54) **DISPLAY DEVICE AND OPERATION METHOD THEREFOR**

(71) Applicant: LG Electronics Inc., Yeongdeungpo-gu Seoul 07336 (KR)
(72) Inventor: MIN, Sunki, Seoul 06772 (KR); LEE, Jaekyung, Seoul 06772 (KR); KWAK, Changmin, Seoul 06772 (KR); LEE, Hyangjin, Seoul 06772 (KR); BYEON, Yeongbin, Seoul 06772 (KR)
(74) Representative: Schornack, Oliver
(86) International application number: PCT/KR2022/011791
(87) International publication number: WO 2024/034696

(57) **Abstract**

A display device and an operation method therefor are disclosed. The display device, according to an embodiment of the present disclosure, comprises: a memory; a sensor module for obtaining location information of the display device; and a control unit which obtains information about a space to which the display device belongs from the obtained location information, detects a user around the display device in the space, reads, from the memory, usability analysis information about the display device on the basis of the obtained space information and detected user information, and changes at least a portion of a user interface being provided through a display, on the basis of the read usability analysis information.

## Description

### [Technical field]

The present disclosure relates to a display device and an operating method thereof.

### [Background art]

Recently, the functions of terminals have been diversified, for example, data and voice communication, taking pictures and videos using a camera, recording voice, playing music files using a speaker system, and outputting images or videos to a display.

Some terminals have an added electronic game play function or perform a multimedia player function.

As the functions of such terminals have diversified, they are being implemented in the form of multimedia players with complex functions such as taking pictures or videos, playing music or video files, playing games, and receiving broadcasts.

Conventionally, display devices equipped with large displays such as TVs were generally used by being fixed to a wall or a separate stand.

However, as portable display devices have recently been released, there has been a demand for a method to improve viewer convenience by taking this mobility into account, but this has not been done, resulting in inconvenience in use.

### [Disclosure of the Invention]

### [Technical Problem]

The present disclosure provides a display device and an operating method thereof that adaptively provides optimal information to a user based on space information where the display device is located and user information existing in the corresponding space.

### [Technical Solution]

A display device according to an embodiment of the present disclosure may include a memory; a sensor module configured to obtain location information of the display device; and a controller configured to obtain information about a space to which the display device belongs from the obtained location information, detect a user around the display device in the space, read usability analysis information about the display device from the memory based on the obtained space information and the detected user information, and control at least a part of a user interface currently being provided through a display to be changed based on the read usability analysis information.

A method for operating a display device according to an embodiment of the present disclosure may include detecting an event signal; obtaining current location information of the display device according to the detected event signal, and obtaining spatial information based on the obtained location information; identifying a user around the display device; obtaining usability analysis information based on the obtained spatial information and the identified user information; and changing and outputting a part of a user interface currently being provided based on the obtained usability analysis information.

### [Effect of the invention]

According to at least one of the various embodiments of the present disclosure, when using a movable display device, there is an effect of being able to adaptively provide optimal information to the user according to the movement space.

### [Brief description of the drawings]

FIG. 1 is a block diagram illustrating the configuration of a display device according to an embodiment of the present invention.
FIG. 2 is a block diagram of a remote control device according to an embodiment of the present invention.
FIG. 3 illustrates an actual configuration example of a remote control device according to an embodiment of the present invention.
FIG. 4 illustrates an example of utilizing a remote control device according to an embodiment of the present invention.
FIG. 5 is a diagram for explaining a horizontal mode and a vertical mode of a stand-type display device according to an embodiment of the present disclosure.
FIG. 6 is a block diagram of a configuration of a display device according to another embodiment of the present disclosure.
FIG. 7 is a drawing for explaining a movable display device and its basic operation method according to an embodiment of the present disclosure.
FIGS. 8 to 14 are drawings for explaining an operation method in a display device moved to a predetermined space according to various embodiments of the present disclosure.
FIGS. 15 and 16 are drawings for explaining an operation method in a display device moved to a predetermined space according to various embodiments of the present disclosure.
FIG. 17 is a flowchart for explaining an operation method in a display device moved to a predetermined space according to various embodiments of the present disclosure.
FIG. 18 is a flowchart for explaining an operation method in a display device according to another embodiment of the present disclosure.

### [Best Mode]

Hereinafter, embodiments related to the present invention will be described in more detail with reference to the drawings. The suffixes "module" and "part" used for components in the following description are given or used interchangeably only for the convenience of writing the specification, and do not have distinct meanings or roles in themselves.

The display device according to the embodiment of the present invention is, for example, an intelligent display device that adds a computer support function to the broadcast reception function, and while being faithful to the broadcast reception function, it can have an interface that is more convenient to use, such as a manual input device, a touch screen, or a space remote control, by adding an Internet function, etc. In addition, it can perform functions such as email, web browsing, banking, or games by connecting to the Internet and a computer with the support of wired or wireless Internet functions. A standardized general-purpose Operating System (OS) can be used for these various functions.

Therefore, the display device described in the present invention can perform various user-friendly functions, for example, since various applications can be freely added or deleted on a general-purpose OS kernel. The above display device may be, more specifically, a network TV, HBBTV, smart TV, LED TV, OLED TV, etc., and may be applied to a smartphone in some cases.

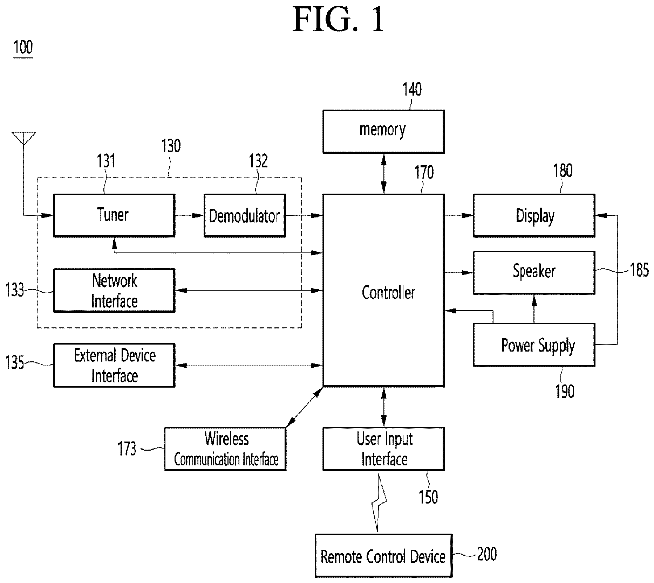

FIG. 1 is a block diagram illustrating the configuration of a display device according to an embodiment of the present invention.

Referring to FIG. 1, the display device 100 may include a broadcast receiving unit 130, an external device interface 135, a memory 140, a user input interface 150, a controller 170, a wireless communication interface 173, a display 180, a speaker 185, and a power supply circuit 190.

The broadcast receiving unit 130 may include a tuner 131, a demodulator 132, and a network interface 133.

The tuner 131 may select a specific broadcast channel according to a channel selection command. The tuner 131 can receive a broadcast signal for a specific broadcast channel that has been selected.

The demodulator 132 can separate the received broadcast signal into a video signal, an audio signal, and a data signal related to a broadcast program, and can restore the separated video signal, audio signal, and data signal into a form that can be output.

The external device interface 135 can receive an application or an application list in an adjacent external device and transmit it to the controller 170 or the memory 140.

The external device interface 135 can provide a connection path between the display device 100 and the external device. The external device interface 135 can receive one or more of images and audio output from an external device connected to the display device 100 wirelessly or by wire and transmit it to the controller 170. The external device interface 135 can include a plurality of external input terminals. The plurality of external input terminals may include an RGB terminal, one or more High-Definition Multimedia Interface (HDMI) terminals, and a component terminal.

An image signal of an external device input through an external device interface 135 may be output through a display 180. An audio signal of an external device input through an external device interface 135 may be output through a speaker 185.

An external device that can be connected to the external device interface 135 may be any one of a set-top box, a Blu-ray player, a DVD player, a game console, a sound bar, a smartphone, a PC, a USB memory, and a home theater, but this is only an example.

The network interface 133 may provide an interface for connecting the display device 100 to a wired/wireless network including the Internet. The network interface 133 may transmit or receive data with another user or another electronic device through the connected network or another network linked to the connected network.

In addition, some content data stored in the display device 100 can be transmitted to another user or another electronic device selected from among users or electronic devices pre-registered in the display device 100.

The network interface 133 can access a predetermined web page through the connected network or another network linked to the connected network. That is, it can access a predetermined web page through the network and transmit or receive data with the corresponding server.

In addition, the network interface 133 can receive content or data provided by a content provider or network operator. That is, the network interface 133 can receive content such as movies, advertisements, games, VODs, broadcast signals, etc. provided from a content provider or network provider through the network and information related thereto.

In addition, the network interface 133 can receive firmware update information and update files provided by the network operator, and can transmit data to the Internet or the content provider or network operator.

The network interface 133 can select and receive a desired application from among applications open to the public through the network.

The memory 140 stores programs for each signal processing and control within the controller 170, and can store processed images, voices, or data signals.

In addition, the memory 140 can perform a function for temporary storage of images, voices, or data signals input from an external device interface 135 or a network interface 133, and can store information about a given image through a channel memory function.

The memory 140 can store an application or a list of applications input from an external device interface 135 or a network interface 133.

The display device 100 can play content files (video files, still image files, music files, document files, application files, etc.) stored in the memory 140 and provide them to the user.

The user input interface 150 can transmit a signal input by the user to the controller 170 or transmit a signal from the controller 170 to the user. For example, the user input interface 150 can receive and process control signals such as power on/off, channel selection, and screen settings from the remote control device 200 according to various communication methods such as Bluetooth, Ultra Wideband (UWB), ZigBee, Radio Frequency (RF) communication, or infrared (IR) communication, or process control signals from the controller 170 to be transmitted to the remote control device 200.

In addition, the user input interface 150 can transmit a control signal input from a local key (not shown) such as a power key, a channel key, a volume key, and a setting value to the controller 170.

An image signal processed by the controller 170 can be input to the display 180 and displayed as an image corresponding to the image signal. In addition, the image signal processed by the controller 170 can be input to an external output device through the external device interface 135.

The audio signal processed by the controller 170 can be output as audio to the speaker 185. In addition, the audio signal processed by the controller 170 can be input to an external output device through the external device interface 135.

In addition, the controller 170 can control the overall operation within the display device 100.

In addition, the controller 170 can control the display device 100 by a user command or an internal program input through the user input interface 150, and can connect to a network to allow the user to download a desired application or an application list into the display device 100.

The controller 170 allows the user-selected channel information, etc. to be output together with the processed image or audio signal through the display 180 or the speaker 185.

In addition, the controller 170 allows an image signal or an audio signal from an external device, such as a camera or a camcorder, to be output through the display 180 or speaker 185 according to an external device image playback command received through the user input interface 150 through the external device interface 135.

Meanwhile, the controller 170 can control the display 180 to display an image, and can control, for example, a broadcast image input through the tuner 131, an external input image input through the external device interface 135, an image input through the network interface, or an image stored in the memory 140 to be displayed on the display 180. In this case, the image displayed on the display 180 can be a still image or a moving image, and can be a 2D image or a 3D image.

In addition, the controller 170 can control the playback of content stored in the display device 100, or received broadcast content, or external input content input from the outside, and the content can be in various forms such as broadcast images, external input images, audio files, still images, connected web screens, document files, etc.

The wireless communication interface 173 can perform communication with an external device through wired or wireless communication. The wireless communication interface 173 can perform short range communication with an external device. To this end, the wireless communication interface 173 can support short range communication using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (Wireless USB) technologies. The wireless communication interface 173 can support wireless communication between the display device 100 and a wireless communication system, between the display device 100 and another display device 100, or between the display device 100 and a network where the display device (100, or an external server) is located via a wireless area network. The wireless area network can be a wireless personal area network.

Here, the other display device 100 can be a wearable device (e.g., a smart watch, smart glass, or a head mounted display (HMD)) capable of exchanging data with the display device 100 according to the present invention (or capable of interoperability), a mobile terminal such as a smart phone. The wireless communication interface 173 can detect (or recognize) a wearable device capable of communicating around the display device 100.

Furthermore, if the detected wearable device is a device certified to communicate with the display device 100 according to the present invention, the controller 170 can transmit at least a portion of the data processed in the display device 100 to the wearable device via the wireless communication interface 173. Accordingly, the user of the wearable device can use the data processed in the display device 100 via the wearable device.

The display 180 can generate a driving signal by converting the image signal, data signal, OSD signal processed in the controller 170 or the image signal, data signal, etc. received from the external device interface 135 into R, G, B signals, respectively.

Meanwhile, the display device 100 illustrated in FIG. 1 is only an embodiment of the present invention. Some of the illustrated components may be integrated, added, or omitted depending on the specifications of the display device 100 that is actually implemented.

That is, two or more components may be combined into one component, or one component may be subdivided into two or more components, as needed. In addition, the functions performed by each block are for explaining an embodiment of the present invention, and the specific operations or devices thereof do not limit the scope of the rights of the present invention.

According to another embodiment of the present invention, unlike as shown in FIG. 1, the display device 100 may receive and play an image through a network interface 133 or an external device interface 135 without having a tuner 131 and a demodulator 132.

For example, the display device 100 may be implemented by separating it into an image processing device, such as a set-top box for receiving broadcast signals or contents according to various network services, and a content playback device for playing contents input from the image processing device.

In this case, the operation method of the display device according to the embodiment of the present invention to be described below may be performed by any one of the display device 100 described with reference to FIG. 1, as well as an image processing device such as the separated set-top box, or a content playback device having a display 180 and an audio output unit 185.

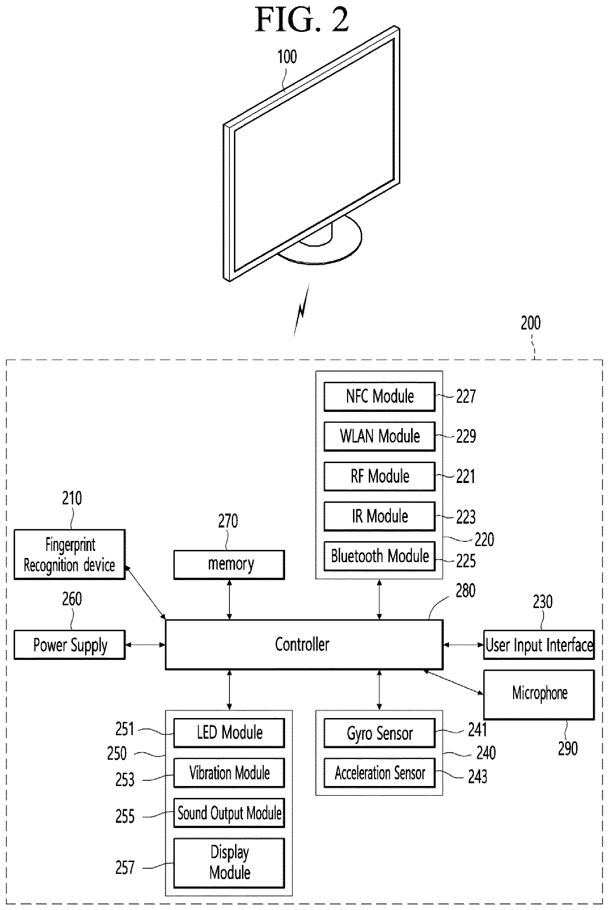

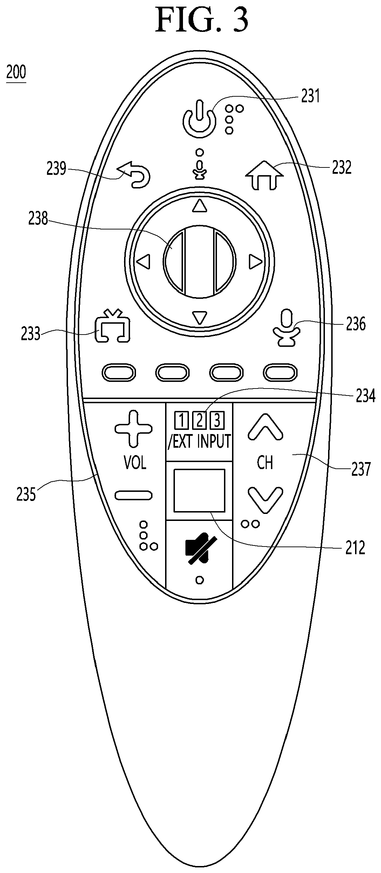

Next, with reference to FIGS. 2 and 3, a remote control device according to an embodiment of the present invention will be described.

FIG. 2 is a block diagram of a remote control device according to an embodiment of the present invention, and FIG. 3 illustrates an example of an actual configuration of a remote control device 200 according to an embodiment of the present invention.

First, with reference to FIG. 2, the remote control device 200 may include a fingerprint recognition device 210, a wireless communication circuit 220, a user input interface 230, a sensor 240, an output interface 250, a power supply circuit 260, a memory 270, a controller 280, and a microphone 290.

With reference to FIG. 2, the wireless communication circuit 220 transmits and receives signals with any one of the display devices 100 according to the embodiments of the present invention described above.

The remote control device 200 may be equipped with an RF circuit 221 capable of transmitting/receiving signals with the display device 100 according to RF communication standards, and an IR circuit 223 capable of transmitting/receiving signals with the display device 100 according to IR communication standards. In addition, the remote control device 200 may be equipped with a Bluetooth circuit 225 capable of transmitting/receiving signals with the display device 100 according to Bluetooth communication standards. In addition, the remote control device 200 may be equipped with an NFC circuit 227 capable of transmitting/receiving signals with the display device 100 according to NFC communication standards, and a WLAN circuit 229 capable of transmitting/receiving signals with the display device 100 according to WLAN communication standards.

In addition, the remote control device 200 transmits a signal containing information about the movement of the remote control device 200 to the display device 100 through the wireless communication circuit 220.

Meanwhile, the remote control device 200 can receive a signal transmitted by the display device 100 through the RF circuit 221, and, if necessary, can transmit commands for power on/off, channel change, volume change, etc. to the display device 100 through the IR circuit 223.

The user input interface 230 can be composed of a keypad, a button, a touch pad, or a touch screen. The user can input a command related to the display device 100 to the remote control device 200 by operating the user input interface 230. If the user input interface 230 is equipped with a hard key button, the user can input a command related to the display device 100 to the remote control device 200 through a push operation of the hard key button. This will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, a confirmation button 238, and a back button 239.

The fingerprint recognition button 212 may be a button for recognizing a user's fingerprint. In one embodiment, the fingerprint recognition button 212 may be capable of a push operation, and may receive a push operation and a fingerprint recognition operation.

The power button 231 may be a button for turning the power of the display device 100 on/off.

The home button 232 may be a button for moving to the home screen of the display device 100.

The live button 233 may be a button for displaying a real-time broadcast program.

The external input button 234 may be a button for receiving an external input connected to the display device 100.

The volume control button 235 may be a button for adjusting the size of the volume output by the display device 100.

The voice recognition button 236 may be a button for receiving a user's voice and recognizing the received voice.

The channel change button 237 may be a button for receiving a broadcast signal of a specific broadcast channel.

The confirmation button 238 may be a button for selecting a specific function, and the back button 239 may be a button for returning to the previous screen.

FIG. 2 will be described again.

If the user input interface 230 has a touch screen, the user can input a command related to the display device 100 to the remote control device 200 by touching the soft key of the touch screen. In addition, the user input interface 230 can have various types of input means that the user can operate, such as a scroll key or a jog key, and this embodiment does not limit the scope of the rights of the present disclosure.

The sensor 240 can have a gyro sensor 241 or an acceleration sensor 243, and the gyro sensor 241 can sense information about the movement of the remote control device 200.

For example, the gyro sensor 241 can sense information about the operation of the remote control device 200 based on the x, y, and z axes, and the acceleration sensor 243 can sense information about the movement speed of the remote control device 200. Meanwhile, the remote control device 200 may further be equipped with a distance measuring sensor, so as to sense the distance to the display 180 of the display device 100.

The output interface 250 may output a video or audio signal corresponding to the operation of the user input interface 230 or the signal transmitted from the display device 100.

The user may recognize whether the user input interface 230 is being operated or whether the display device 100 is being controlled through the output interface 250.

For example, the output interface 250 may be equipped with an LED 251 that lights up when the user input interface 230 is operated or a signal is transmitted and received with the display device 100 through the wireless communication unit 225, a vibrator 253 that generates vibration, a speaker 255 that outputs sound, or a display 257 that outputs an image.

In addition, the power supply circuit 260 supplies power to the remote control device 200, and power waste can be reduced by stopping the power supply when the remote control device 200 does not move for a predetermined period of time.

The power supply circuit 260 can resume the power supply when a predetermined key provided in the remote control device 200 is operated.

The memory 270 can store various types of programs, application data, etc. required for the control or operation of the remote control device 200.

When the remote control device 200 wirelessly transmits and receives signals through the display device 100 and the RF circuit 221, the remote control device 200 and the display device 100 transmit and receive signals through a predetermined frequency band.

The controller 280 of the remote control device can store and refer to information about the frequency band that can wirelessly transmit and receive signals with the display device 100 paired with the remote control device 200 in the memory 270.

The controller 280 controls all matters related to the control of the remote control device 200. The controller 280 can transmit a signal corresponding to a predetermined key operation of the user input interface 230 or a signal corresponding to the movement of the remote control device 200 sensed by the sensor 240 to the display device 100 through the wireless communication unit 225.

In addition, the microphone 290 of the remote control device 200 can obtain voice.

A plurality of microphones 290 can be provided.

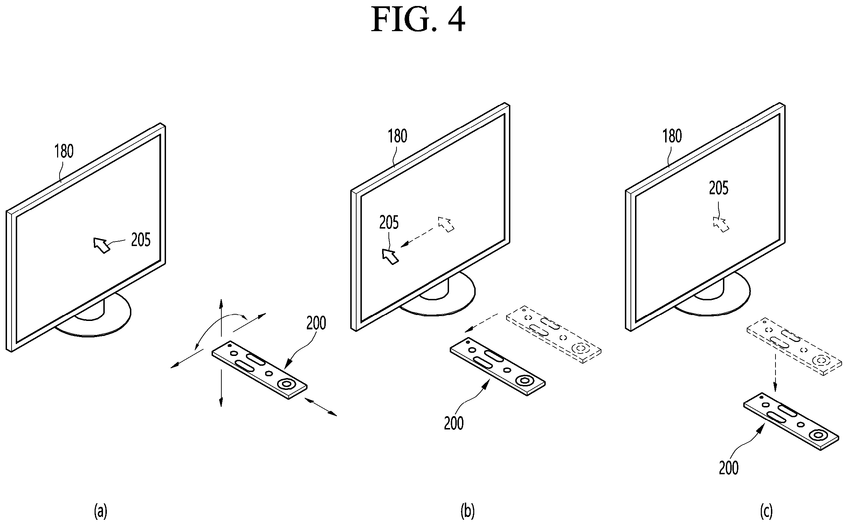

Next, FIG. 4 is described.

FIG. 4 illustrates an example of utilizing a remote control device 200 according to an embodiment of the present invention.

FIG. 4(a) illustrates that a pointer 205 corresponding to a remote control device 200 is displayed on a display 180.

A user can move or rotate the remote control device 200 up and down, left and right. The pointer 205 displayed on the display 180 of the display device 100 corresponds to the movement of the remote control device 200. Since the pointer 205 is moved and displayed according to the movement in 3D space, as shown in the drawing, this remote control device 200 can be named a 'space remote control'.

FIG. 4(b) exemplifies that when a user moves the remote control device 200 to the left, the pointer 205 displayed on the display 180 of the display device 100 also moves to the left in response.

Information about the movement of the remote control device 200 detected through the sensor of the remote control device 200 is transmitted to the display device 100. The display device 100 can calculate the coordinates of the pointer 205 from the information about the movement of the remote control device 200. The display device 100 can display the pointer 205 in response to the calculated coordinates.

FIG. 4(c) exemplifies a case where a user moves the remote control device 200 away from the display 180 while pressing a specific button in the remote control device 200. By this, the selection area in the display 180 corresponding to the pointer 205 can be zoomed in and displayed in an enlarged manner.

Conversely, when the user moves the remote control device 200 closer to the display 180, the selection area in the display 180 corresponding to the pointer 205 can be zoomed out and displayed in a reduced manner.

Meanwhile, when the remote control device 200 moves away from the display 180, the selection area can be zoomed out, and when the remote control device 200 moves closer to the display 180, the selection area can be zoomed in.

In addition, when a specific button in the remote control device 200 is pressed, the recognition of up, down, left, and right movements can be excluded. That is, when the remote control device 200 moves away from or closer to the display 180, the up, down, left, and right movements can be recognized only, and only the forward and backward movements can be recognized. When a specific button in the remote control device 200 is not pressed, only the pointer 205 moves according to the up, down, left, and right movements of the remote control device 200.

Meanwhile, the moving speed or moving direction of the pointer 205 may correspond to the moving speed or moving direction of the remote control device 200.

Meanwhile, the pointer in this specification refers to an object displayed on the display 180 in response to the operation of the remote control device 200. Therefore, in addition to the arrow shape shown in the drawing, the pointer 205 may be an object of various shapes, for example, a concept including a point, a cursor, a prompt, a thick outline, etc. In addition, the pointer 205 may be displayed corresponding to one point of the horizontal and vertical axes on the display 180, and may also be displayed corresponding to multiple points such as a line or a surface.

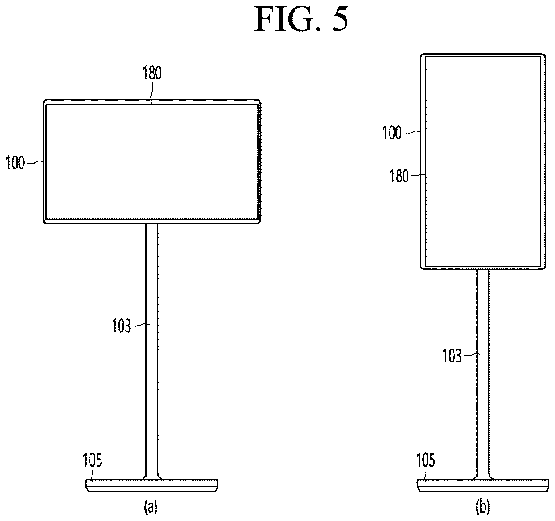

FIG. 5(a) and FIG. 5(b) are drawings for explaining the horizontal mode and the vertical mode of a stand-type display device according to an embodiment of the present disclosure.

Referring to FIG. 5(a) and FIG. 5(b), a stand-type display device 100 is illustrated.

A shaft 103 and a stand base 105 may be connected to the display device 100.

The shaft 103 may connect the display device 100 and the stand base 105. The shaft 103 may be extended vertically.

The lower end of the shaft 103 may be connected to an edge of the stand base 105.

The lower end of the shaft 103 may be rotatably connected to a periphery of the stand base 105.

The display device 100 and the shaft 103 can rotate around a vertical axis relative to the stand base 105.

The upper portion of the shaft 103 can be connected to the rear of the display device 100.

The stand base 105 can serve to support the display device 100.

The display device 100 can be configured to include the shaft 103 and the stand base 105.

The display device 100 can rotate around a point where the upper portion of the shaft 103 and the rear portion of the display 180 meet.

FIG. 5(a) illustrates that the display 180 operates in a landscape mode in which the horizontal length is greater than the vertical length, and FIG. 5(b) illustrates that the display 180 operates in a landscape mode in which the vertical length is greater than the horizontal length.

The user can carry and move the stand-type display device. That is, unlike a fixed device, the stand-type display device 100 has improved mobility, so the user is not restricted by the placement location.

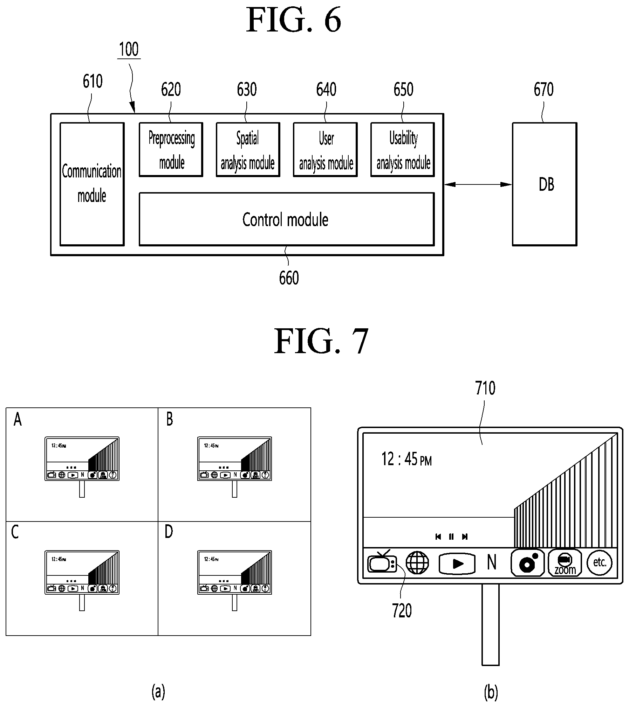

FIG. 6 is a block diagram of a display device 100 according to another embodiment of the present disclosure.

The display device 100 may be configured to include a communication module 610, a preprocessing module 620, a space analysis module 630, a user analysis module 640, a usability analysis module 650, a control module 660, etc. Some of these components may correspond to or be replaced with the components of FIG. 1 described above.

The communication module 610 supports wired/wireless communication protocols and may collect or receive data through data communication with at least one external device.

At this time, the external devices may include sensors, Internet of Things (IoT) devices, various home appliance devices, servers, external Databases (DBs), etc. However, the present disclosure is not limited thereto.

The preprocessing module 620 can preprocess and classify data received through the communication module 610. The data preprocessed and classified in this way may include spatial data, user data, usability data, etc.

The spatial information or spatial data may be derived based on, for example, location information.

At this time, the location information may be Global Positioning System (GPS) sensor information or may be derived based thereon, but is not limited thereto.

According to an embodiment, the spatial information may be derived using a value sensed through a Laser Distance Sensor (LDS).

According to another embodiment, the spatial information may be derived based on an image obtained by the display device 100 or a sensor. To this end, the display device 100 may require a learning model generated by learning based on a learning data set built in advance on a server. In other words, spatial information corresponding to the image may be derived based on artificial intelligence.

In order to replace or assist the above location information, sensor data such as motion data regarding movement or movement information of the user or the display device 100, acceleration data regarding changes in speed or momentum of the user or the display device 100, geomagnetic data for obtaining direction information of the user or the display device 100, etc. may be further referenced. Meanwhile, the user in the above may refer to the user's terminal. Each of the above sensor data may be used to replace or combine location information such as the GPS information to derive location information.

When the location information is derived, the spatial analysis module 630 may derive spatial information where the display device 100 is located based on the derived location information. At this time, the display device 100 may store map data in the DB 670 in advance. Therefore, the spatial analysis module 630 may read the map data or read only data of a specific map area based on the location information to identify an area corresponding to the location information, i.e., a space.

The spatial analysis module 630 may not only derive and identify spatial information about the space where the display device 100 is located, but may also derive analysis information about the identified space. In this regard, the display device 100 may map or tag information that distinguishes each space as a living room, a bedroom, a kitchen, etc. to the map data and store it together.

The spatial analysis information may include information about the user(s) using the display device 100 (e.g., as a main user), information about what content was played on the display device 100 in each space, information about which user mainly used it, etc. Depending on the embodiment, the spatial analysis information may include characteristic information about each space itself or user information related to each space. In the above, the characteristic information about each space itself may include information about the specific purpose or use characteristics of the space, such as a kitchen, a bathroom, or a bedroom, for example. User information having a specific relationship with the above space may include, for example, information about a user (mother) who is mainly in charge of cooking if the above space is a kitchen. Each piece of information may be referenced in selecting priorities when determining the main user for the space.

The user analysis module 630 may derive user identification information detected around the display device 100 located in a predetermined space and analysis information about the identified user. The user analysis information may include information about a preferred content list, currently playing content, recent content usage patterns, comparison with the user's previous content usage patterns, etc.

According to an embodiment, the user's identification may use at least one of the login information (or password input) of the display device 100, terminal information possessed by the user, specific gestures, and biometric information such as fingerprints or irises. With respect to the information used for the user identification, the server or the display device 100 may register or receive and store relevant personal information of each user.

According to an embodiment, the display device 100 (or server) can derive characteristic points for a user's full body image, a specific part image such as a face, etc. obtained through a camera sensor, and identify the user through artificial intelligence model-based learning. To this end, the display device 100 can prepare a learning data set for the user in advance, create a learning model, and pre-learn the learning model to be used for the user identification.

According to an embodiment, when the display device 100 (or server) receives the user's voice data through a built-in or remote control-mounted voice recognition sensor, the voice data is processed as Speech to Text (STT) and transmitted to the server, and the server can recognize and analyze the user's voice through Natural Language Processing (NLP) and map it to the user and store it. According to an embodiment, the role of the server can be replaced by the display device 100.

The user's voice recognition analysis content stored in the server can be used for the user identification. That is, when the display device 100 receives the user's voice, it can identify the user by comparing it with the stored user voice sample data.

The usability analysis module 650 can receive the space analysis data of the space analysis module 630 and the user analysis data of the user analysis module 640, respectively, and analyze the usability data of the corresponding user in the corresponding space from them. According to an embodiment, the usability analysis module 650 may perform usability analysis based on either analysis data, rather than combining the space analysis data and the user analysis data to perform usability analysis.

The usability analysis data may include analysis information on applications or contents mainly used by a specific user in a specific space, analysis information on devices mainly used by the user in the corresponding space, including the display device 100, analysis information on devices such as speakers mainly paired or connected to the display device 100, analysis information on functions mainly used by the user in the corresponding space while using the display device 100, etc.

When the analysis information of the usability analysis module 650 is generated in this way, the display device 100 (or server) can generate and store information by matching space-user-usability. If the information stored above matches multiple users and/or multiple usability information for one space, the display device 100 can determine a priority for the user or usability for the space, and map the determined priority to the corresponding information and store it.

According to an embodiment, the display device 100 can use the analysis information derived through each analysis module 630, 640, 650 illustrated in FIG. 6 to replace the corresponding previously stored analysis information, or can use it in a way that updates the previously stored analysis information. In the latter method, that is, when updating the previously stored analysis information, the display device 100 can compare the corresponding analysis information with the previously stored analysis information, and if a specificity, etc. is found, it can be given a weight and referenced during the update.

According to the embodiment, if the analysis information derived through each analysis module 630, 640, 650 illustrated in FIG. 6 does not recognize a significant difference between the analysis information performed immediately before or previously or the analysis information already stored and the analysis information for updating or replacing, the display device 100 may disregard the derived analysis information. The above process may be used, for example, for the purpose of determining whether a specific analysis module is malfunctioning.

The control module 660 may include a sensor module (not illustrated) including various sensors described herein, and may receive and process data obtained by being sensed by external sensors and transmit them to other modules.

The DB 670 may be one of the built-in memories or one of the remotely located storage spaces. In FIG. 6, one DB is illustrated, but it is not limited thereto and may be multiple.

According to one embodiment of the present disclosure, the display device 100 may be fixed to a specific location like a traditional TV and may be moved to various spaces.

Referring to FIG. 7(a), map data is illustrated in which spaces A to D are displayed separately. The display device 100 according to the present disclosure can be moved to any space within the map, that is, space A, space B, space C, or space D.

The spatial movement of the display device 100 may be manually performed by the user, or may be automatically performed according to the user's movement or command. In the latter case, the display device 100 may be provided with a driving means for movement or driving, such as a wheel or wheels, on the stand base 105 portion of the display device 100 illustrated in FIG. 5.

According to the embodiment, the display device 100 is implemented with a configuration similar to a driving means for autonomous driving of an autonomous mobility such as an unmanned robot vacuum cleaner in the stand base 105 portion of the display device 100 illustrated in FIG. 5, and by borrowing the driving method thereof, it can be controlled to move to a specific space or automatically controlled to follow the user through a remote control or a user's voice command.

FIG. 7(b) is illustrated to explain the operation of the display device 100 in space A (for convenience, a reference space or a basic space), and the display 180 outputs a main screen 710, and a first menu 720 can be output in one area of the main screen 710. The first menu 720 can be, for example, a home menu or a basic menu. At this time, the first menu 720 can be arbitrarily set or arbitrarily changed depending on the server or the user. Meanwhile, the area where the first menu 720 is output may be, for example, the lower area of the main screen 710, but is not limited thereto.

In addition, the screen configuration of the display device 100 illustrated in FIG. 7(b) is an example for convenience of explanation, and the display device 100 located in the reference space does not always have to have the display 180 screen configuration as in FIG. 7(b).

In this specification, the operating method of the display device 100 is based on space information identified according to the current location of the display device 100, but the present disclosure is not necessarily limited thereto.

According to another embodiment of the present disclosure, information on which space the display device 100 has moved from to the current location may also be referenced as an important factor. For example, even if the display device 100 is currently located in space B, if it moves from space A to space B, if it moves from space C to space B, or if it moves from space D to space B, the user interface provided by the display device 100 located in space B can be controlled to be different in each of the above cases. In one embodiment, if the display device 100 moves from the living room to the bedroom and if it moves from the kitchen to the bedroom, the user interface provided by the display device 100 can be implemented differently.

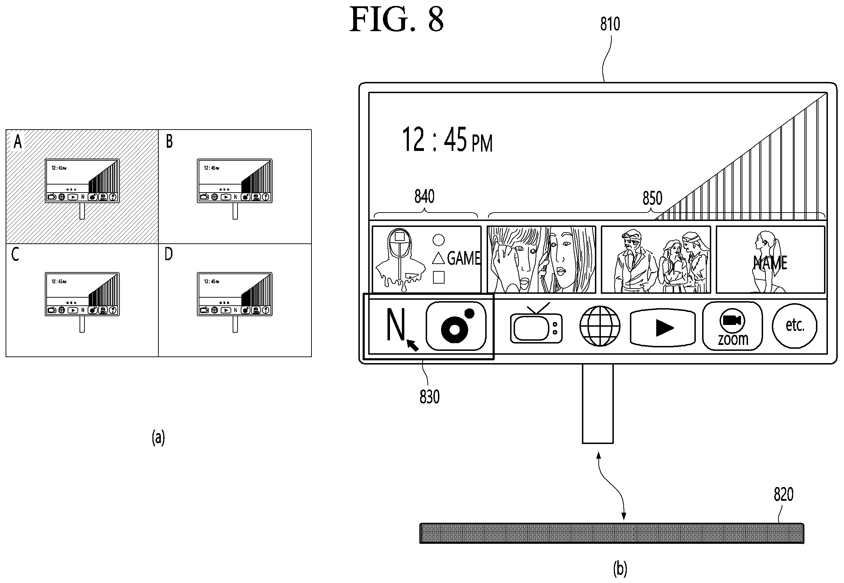

In the following FIGS. 8 to 14, examples of an operation method of the display device 100 when it moves from one space to another can be viewed.

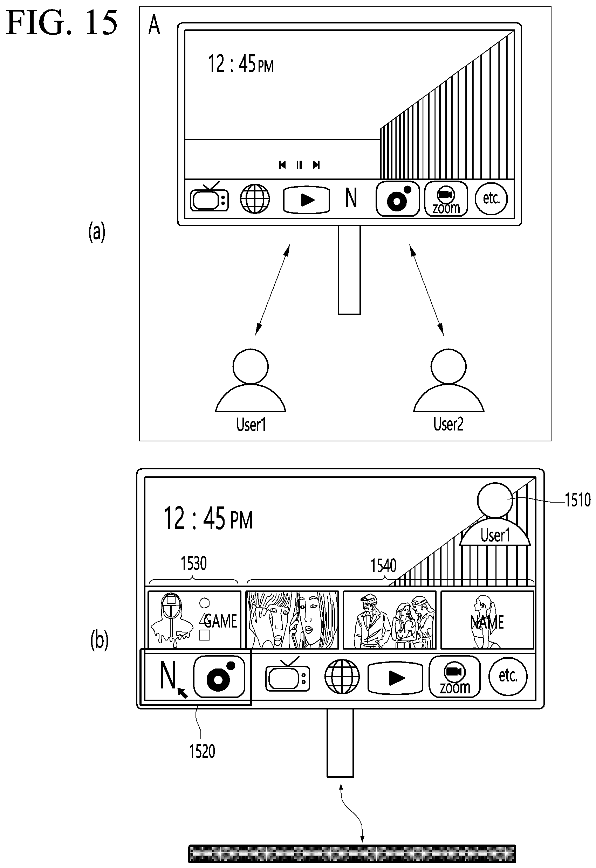

FIGS. 15 to 16, in particular, can be viewed as examples of an operation method of the display device 100 when multiple users are detected around the display device 100.

According to the present disclosure, the operation method of the display device 100 can be determined based on the usability analysis results based on the spatial analysis results and the user analysis results as described above.

For convenience, the operation method of the display device 10 is mainly described below as an example of providing a user interface and an operation according to a user's selection, but is not necessarily limited thereto. Meanwhile, the user interface may include, for example, a home menu bar, a recommended application list, etc.

Meanwhile, the usability analysis result basically considers the spatial analysis result and the user analysis result at a 1:1 ratio, but each priority or weight may be given differently depending on the spatial characteristics, the user characteristics, or other factors, and the ratio may vary accordingly.

When the display device 100 is moved to a specific space, the weight value for the user's characteristics may be set higher than the reference value in the space, or the weight value for the user's characteristics may be set higher than the weight value for the spatial characteristics, or vice versa.

Therefore, when the display device 100 according to the present disclosure recognizes movement to a predetermined space, it can configure and provide a user interface by considering weight values or priorities according to each characteristic in the recognized space as described above.

Meanwhile, the other elements may include, for example, at least one of the user's gesture, voice, remote control input, visual information, and environmental information such as illumination, along with the above characteristics. These other elements may also act as one of the weights in deriving the usability analysis results according to the present disclosure. Alternatively, the other elements may be used to modify the derived usability analysis results or update the usability analysis algorithm.

Meanwhile, the display device 100 may define and store values that can be repeatedly used or fixed for space characteristics, user characteristics, and other element characteristics in advance in the form of a look-up table (LUT). Therefore, the display device 100 may quickly provide a user interface in the moved space based on the look-up table.

Referring to FIG. 8(a), the display device 100 is currently located in space A (e.g., living room), and in this case, due to the characteristics of the living room, a larger weight value may be set or assigned to the spatial characteristics compared to other characteristics. In addition, the living room is an open space where members can enjoy together, and keywords such as 'open space', 'elements for multiple members to enjoy', and 'minimum volume limit' may be assigned or tagged as one of the spatial characteristics, and may be used as a reference for usability analysis.

Accordingly, as illustrated in FIG. 8(b), the display device 100 may provide a home menu bar in the first area 830, information on the content currently being viewed in the second area 840, and information on content similar to the content, including content previously viewed in space A, in the third area 850 on the screen 810 on which content is being output. The above similar content may include content of the same category as the content, content featuring at least one character like the main actor of the content, content with the same or similar rating as the content, content selected by a user using the content, content available on other channels in the same time zone as the time zone in which the content is used, content selected or used by other users other than the currently recognized user in the space, etc.

The home menu bar provided in the first area 830 may be different from the user interface provided in FIG. 7(b), i.e., the configuration of the home menu bar 720. This may be a result of further reflecting the spatial characteristics (and/or user characteristics) according to the current location of the display device 100.

In the present disclosure, the user interface as shown in FIG. 8(b) may be provided, for example, when the display device 100 is positioned in the space and fixed (no longer moving or movement is determined to be moving to another space).

Meanwhile, when the display device 100 provides a user interface as shown in FIG. 8(b), the playback of the content currently being provided on the main screen 810 can be paused, and then the playback can be resumed or other content or applications can be output depending on the user's action.

Meanwhile, referring to FIG. 8(b), when the display device 100 is located in space A, the sound bar 820 can be automatically connected as the default regardless of other output devices. However, this is not limited thereto.

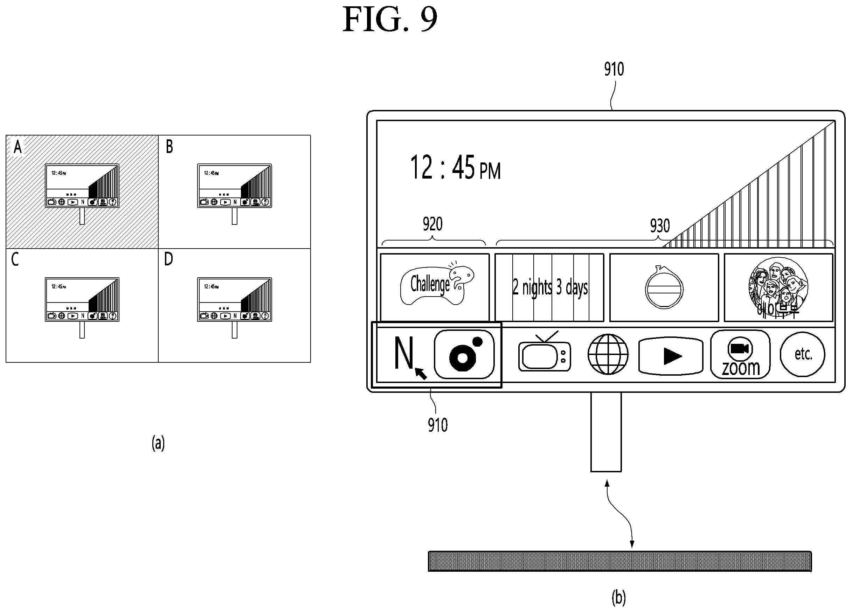

Referring to FIG. 9(a), the display device 100 is positioned in space A in the same manner as in FIG. 8 described above, but compared to FIG. 8, user characteristics may be more considered. At this time, the fact that the user characteristics are more considered may mean that the weight value for the user characteristics is greater than the weight value for the space characteristics. Depending on the embodiment, the fact that the user characteristics are more considered may mean that the space characteristics are completely excluded.

Even if the display device 100 continues to be positioned or moved in space A without moving, if the user is alone, for example, a larger weight value may be given as the weight value for the user characteristics in addition to or despite the space characteristics, and the operation may be controlled accordingly. Depending on the embodiment, the display device 100 may be controlled to reflect the characteristics of the content currently being played in addition to or separately from the user characteristics.

Referring to FIG. 9(b), the home menu bar of the first area 910 may be the same as FIG. 8(b), but the currently playing content information of the second area 920 and similar content information including content previously viewed in space A in the third area 930 may be configured and provided differently from FIG. 8(b). As described above, this may be a result of reflecting user characteristics and/or current playing content characteristics.

In other words, as shown in Figs. 8 and 9, even if the display device 100 is located in the same space, it may indicate that the configuration of the user interface may vary depending on other elements or characteristics such as the user and content.

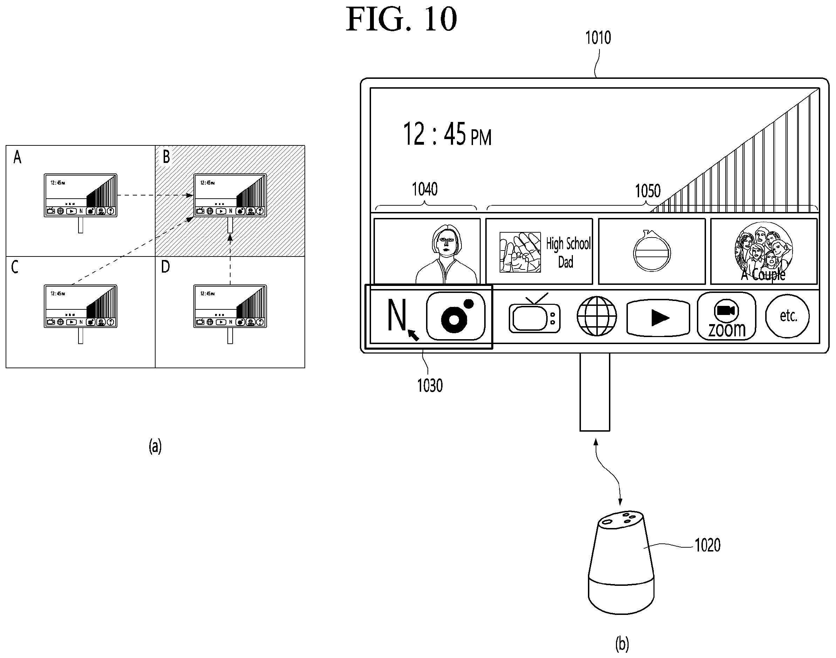

Next, FIG. 10 illustrates a case where the display device 100 moves to space B. At this time, the movement to space B may be performed from space A, space C, or space D, for example.

When the display device 100 is fixed to space B, it can configure and provide a user interface as in FIG. 10(b).

Referring to FIG. 10(b), the display device 100 can provide a home menu bar in the first area 1030 on the screen 1010 for the content being played, information on the content currently being played in the second area 1040, and information on content recently watched in the corresponding space B and similar content in the third area 1050.

Meanwhile, when the display device 100 is located in space B, the smart speaker 1020 can be automatically connected as the default with priority over other output devices as shown in FIG. 10(b), but is not limited thereto.

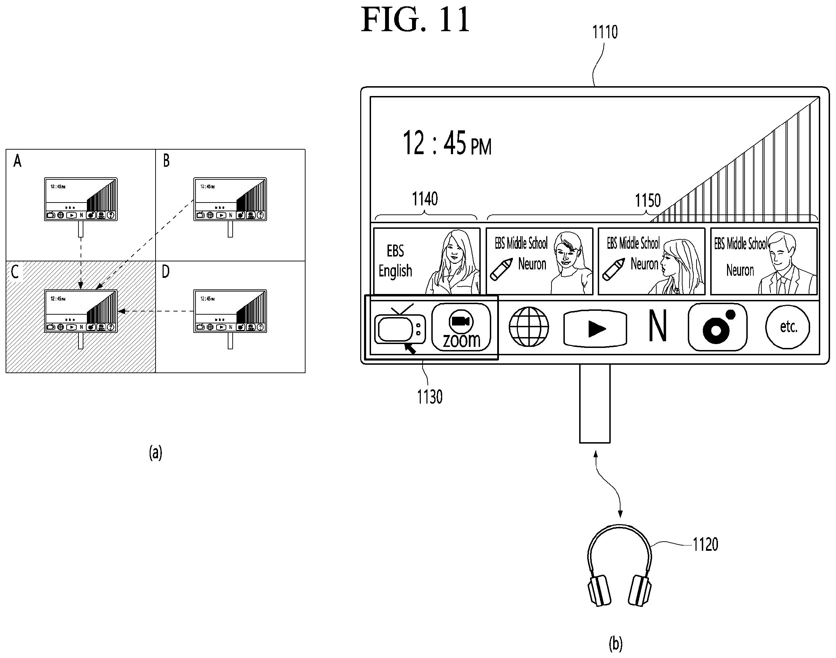

Next, FIG. 11 illustrates a case where the display device 100 has moved to space C. At this time, the movement to the space C can be made from, for example, space A, space B, or space D.

When the display device 100 is fixed to space C, it can configure and provide a user interface such as FIG. 11(b).

Referring to FIG. 11(b), the display device 100 can provide a home menu bar in a first area 1130 on a screen 1110 where content being played is provided, provide information on content currently being played in a second area 1140, and provide information on content recently viewed in the corresponding space C and similar content information in a third area 1150.

Meanwhile, referring to FIG. 11(b), the display device 100 can provide a home menu bar provided in the first area 1130 differently from the configuration of the home menu bar illustrated in the first area of FIGS. 7 to 10 described above.

If the display device 100 is located in space B, the headphones 1120 may be automatically connected as a default with priority over other output devices as shown in FIG. 11(b), but is not limited thereto.

Taking FIG. 11 as an example, if space C is a study room (children's room) or the logged-in or identified main user is a student, the display device 100 may configure and provide a user interface based on time information or the schedule information of the user.

In addition, although the headphones 1120 are automatically connected with priority over other output devices in FIG. 11(b), the display device 100 may change the output device to another output device other than the headphones 1120 based on the properties of the learning content, etc., or may attempt a connection operation by changing the external output device to be automatically connected in advance.

When the display device 100 according to the present disclosure is located in a specific space (e.g., a study room), if it is detected that a user leaves the space or the display panel is turned off, the display device 100 may transmit a guide message for a mirroring service to other external devices in the vicinity and provide the mirroring service. According to an embodiment, instead of a specific space, a specific user or a specific output device that is connected may be used in a similar manner.

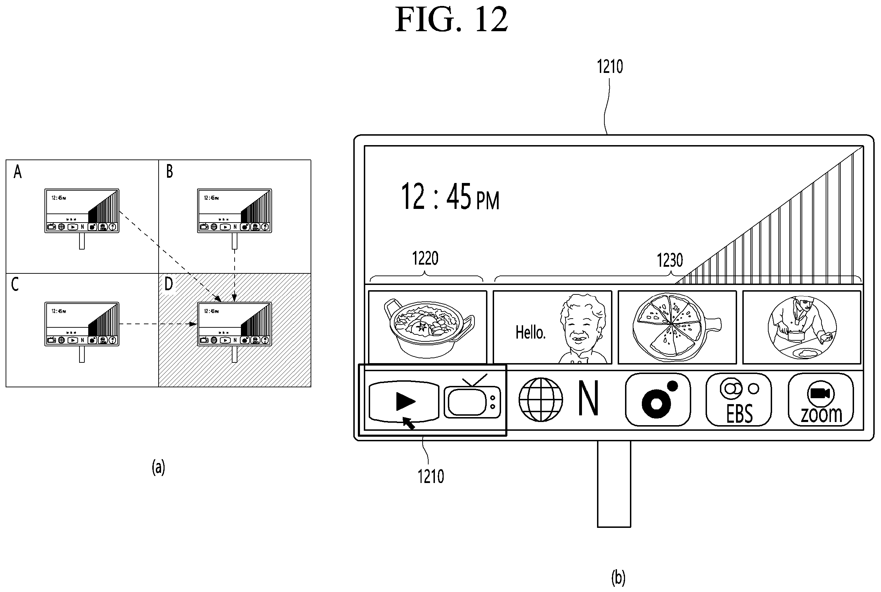

Next, in FIG. 12, the display device 100 is moved to space D. At this time, the movement to space D may be made from space A, space B, or space C, for example.

When the display device 100 is fixed to space D, it may configure and provide a user interface such as FIG. 12(b).

Referring to FIG. 12(b), the display device 100 can provide a home menu bar in the first area 1210 of the screen where content is being provided, information on content currently being played in the second area 1220, and information on content recently viewed in the corresponding space D and similar content in the third area 1230.

As shown in FIG. 12(b), the display device 100 can provide the home menu bar provided in the first area 1210 differently from the configuration of the home menu bar of FIGS. 7 to 11 described above.

According to an embodiment, taking FIG. 12 as an example, the display device 100 can configure a user interface based on time information or user schedule information if space D is a kitchen or the logged-in or identified main user is a mother (cook). For example, the user interface can be configured to include a list of cooking-related content or applications.

According to an embodiment, the display device 100 may use the built-in speaker or configure the user interface differently when an external device to be automatically connected is not searched for or detected, as illustrated in FIG. 12. In this case, the user interface may be configured to expose, for example, content or applications that have no audio output, where audio output is not important, or where subtitles are provided.

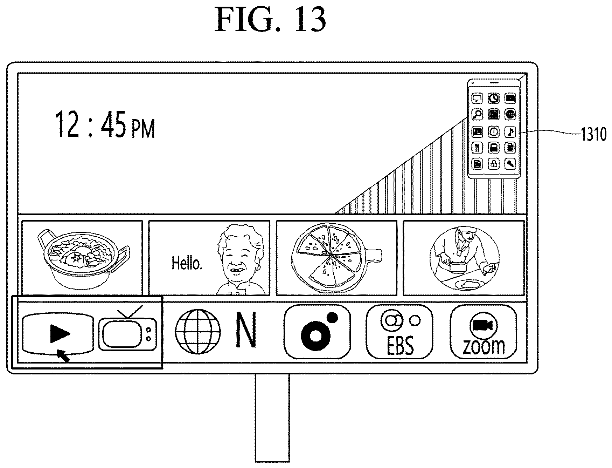

Referring to FIG. 13, when an external device capable of being connected or paired to a moved space or having a previous connection or pairing history is detected, the display device 100 can display the external device in the form of an icon 1310 on the screen of the display device 100 so that the external device can be identified.

According to an embodiment, when a user recognizes a specific service (e.g., a mirroring service) or a preset action (e.g., when the user's movement is detected when the viewing time is short), the display device 100 can detect the external device and display it in the form of an icon so that the user can use the specific service.

Referring to FIG. 13, when an external device is detected in the vicinity, the display device 100 can output it in the form of an icon 1310 on the upper right side of the screen. At this time, the detection operation may use, for example, a broadcast method or a uni-cast method of a signal such as a beacon from the display device 100, but is not limited thereto.

When the icon 1310 is selected, the display device 100 may provide guide information (e.g., including a list of services that can be provided) to provide the corresponding service according to the selection. The service may include transmitting a mirroring service to the corresponding external device, receiving mirroring data from the corresponding external device, using the corresponding external device as an output device such as a speaker, transmitting an operation control signal to the corresponding external device, etc.

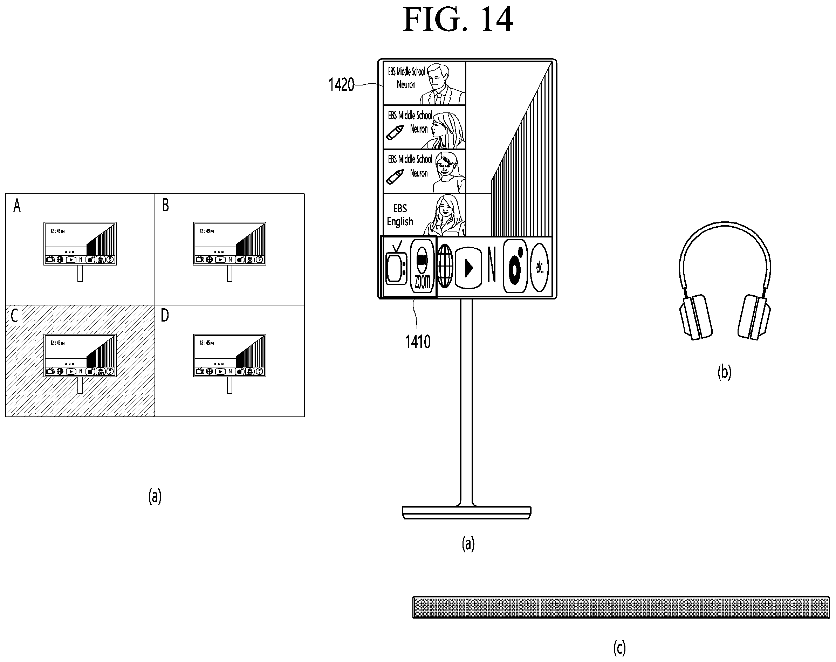

Next, referring to FIG. 14, the display device 100 may move and provide a different display mode or change the display mode according to a fixed space.

As shown in FIG. 14(a), even if the display device 100 was providing a service in a horizontal mode in a previous space (one of space A, space B, or space D), for example, as shown in FIG. 5(a), when moving to space C, the display mode or playback mode may be automatically switched to a vertical mode as shown in FIG. 14(b) to provide a service.

In this case, even if the display mode or playback mode is switched as described above, the display device 100 may provide a user interface in the same manner as before or in a different manner, for example, as shown in FIG. 14(b), depending on the display mode or playback mode. For example, referring to FIG. 14(b), the display device 100 may provide a home menu bar in the first area (horizontal) 1410 in the same manner as before or on the area, but may provide recommended information in a different manner than before, that is, in the second area (vertical) 1420.

In addition, when the playback mode is changed as described above, the display device 100 may provide a list of connectable external devices (FIG. 14(c) or 14(d)). According to an embodiment, when content is selected from the user interface provided in FIG. 14(b) instead of the list information, the display device 100 may determine an external device to be connected according to the selected content and perform an automatic connection operation.

This method may also be applied to other embodiments disclosed herein. That is, the display device 100 may determine an external device to be connected or provide a list of related external devices according to the user's access to the provided user interface.

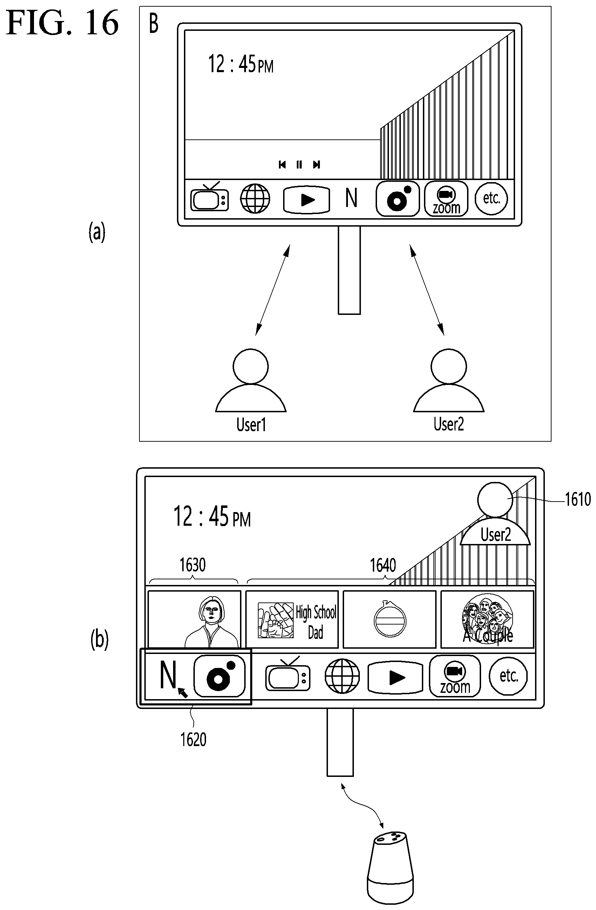

FIGS. 15 and 16 disclose an operating method of the display device 100 when multiple users are detected around the display device 100, unlike FIGS. 8 to 14 described above. The present disclosure performs usability analysis based on user analysis information and reflects or refers to the analysis results in the user interface configuration, and in the case where there are multiple detected users as described above, a processing method is required.

According to an embodiment, a priority may be assigned to each user (e.g., a pre-registered user) according to a space. In the above, the priority may be assigned to determine the main user.

For example, referring to FIG. 15, if the display device 100 is located in space A, user 1 may be selected according to the priority. However, referring to FIG. 16, if the display device 100 is located in space B, user 2, not user 1, may be selected according to the priority.

According to an embodiment, regardless of the space, a priority may be defined based on the relationship between multiple users, and when such priority information is input and stored in the display device 100, the display device 100 may determine the main user based on the user priority together with or separately from the space characteristics and operate accordingly. For example, if it is defined and recorded in advance who is the main user in each of the above pairs, such as dad-mom, dad-daughter, mom-son, mom-daughter, dad-mom-daughter, the display device 100 can operate using the information.

Referring to FIG. 15(a), if user 1 and user 2 are detected as users in space A, and user 1 with a higher priority in space A is determined as the main user based on pair priority information, the display device 100 can configure and provide a user interface (including 1520 to 1540) based on user 1, as shown in FIG. 15(b). Meanwhile, as shown in FIG. 15(b), an icon 1510 for user 1 selected as the main user can be identifiably provided on the screen of the display device 100. At this time, the selection can be changed to another user through the icon 1510, and in that case, it is desirable that the user interface configuration is also adaptively changed and configured and provided.

Referring to FIG. 16(a), if user 1 and user 2 are detected as users in space B, and user 2 with a higher priority in space B is determined as the main user based on the pair priority information, the display device 100 can configure and provide a user interface (including 1620 to 1640) based on user 2, as shown in FIG. 16(b). Meanwhile, as shown in FIG. 16(b), an icon 1610 for user 2 selected as the main user can be identifiably provided on the screen of the display device 100. Similarly, the selection can be changed to another user through the icon 1610, and in that case, the user interface configuration can also be changed and configured and provided to suit the changed user, as described above.

Meanwhile, in FIG. 15(b), a sound bar is connected according to space A-user 1, but FIG. 16(b), a smart speaker can be connected according to space B-user 2. That is, the connected external device can also be controlled differently according to space-user pair information.

In FIGS. 15 and 16, it was described that a main user is determined based on priority information and a user interface is provided based on the determined main user, but according to another embodiment of the present disclosure, the display device 100 may operate in a group mode without determining a main user among a plurality of detected users. The group mode may indicate, for example, a case where it is difficult to determine a main user among a plurality of users, but is not limited thereto. For example, the group mode may be set as a default when a plurality of users are detected. Alternatively, the group mode may or may not be set as a default depending on the space.

In relation to the group mode, if the configuration of the user interface is defined and stored in advance as the aforementioned pair information, the display device 100 may call it from the DB and follow it, otherwise, it may collect currently detected user information, space information, etc., and configure and provide the user interface through usability analysis based on this. At this time, a weight may be assigned to each user in relation to the aforementioned user information, and the value may be different depending on the aforementioned pair information, or an equal value may be assigned regardless of the aforementioned pair information.

In this case, as shown in FIG. 15(b) and FIG. 16(b), user icon information corresponding to each of the multiple users may be provided on the screen, and depending on the selection, the user interface currently being provided may be reconfigured and provided in a customized manner to the selected main user by making the corresponding user the main user.

According to an embodiment, in addition to the aforementioned selection in the case of group mode, the display device 100 may detect user information detected periodically/aperiodically, for example, and, if there is a change in the identified user information, reconfigure the user interface currently being provided in a customized manner. Meanwhile, if only one user remains around the display device 100 as a result of the detection, the corresponding customized user interface may be reconfigured.

According to an embodiment, one of the user interfaces illustrated in the aforementioned FIGS. 8 to 16 may be provided as alarm information on the screen of the display device 100 at a preset time. At this time, the user interface may be determined by at least one of the user information and the spatial information detected by the display device 100. For example, if a mother (user) is watching content through a display device 100 in a space called a living room, when a preset time (e.g., dinner time) approaches, even before moving to another space called a kitchen (e.g., preset), the display device 100 may temporarily provide a cooking-related user interface (a simplified version compared to FIG. 12(b), depending on the embodiment, may also be provided) like alarm information in advance, such as in FIG. 12(b).

In relation to the recognition of space in the present disclosure, the display device 100 may identify the space upon entering the space and depending on which external device is connected. For example, the display device 100 may recognize the space as space A when a sound bar 820 is automatically connected as illustrated in FIG. 8 or 9, may recognize the space as space B when automatically connected to a smart speaker 1020 as illustrated in FIG. 10, and may recognize the space as space C when automatically connected to headphones 1120 as illustrated in FIG. 11. Meanwhile, in the above, the display device 100 may recognize the space as space D when there is no external device connected separately as illustrated in FIG. 12, and in this case, a built-in speaker may be used.

According to an embodiment, when a movement in space is recognized, the display device 100 configures and provides a user interface as shown in FIGS. 8 to 16, but depending on the user's selection or setting, the user may want to not display the configured user interface itself or some application items among them. Accordingly, the display device 100 may provide a simplified version such as a preview (in this case, not the number of applications, but the information provided is minimized or a separate simple application image version) for selection before configuring and providing the full user interface, and the selected list may be excluded from exposure or provided as the simplified version. Meanwhile, according to an embodiment, the simplified version may be provided when moving from space to space or while moving.

In addition, although not shown, the display device 100 may provide a user interface configured differently from the user interface shown in FIGS. 8 to 16 described above depending on the location within the space. For example, the display device 100 may pre-register at least one point within the space. Accordingly, when the display device 100 is located in the space, it determines whether the location is the pre-registered point, and accordingly determines whether to provide a user interface for the space or a user interface for a specific point, and provides the corresponding user interface. For example, even if the display device 100 is located in a space called a child's room, it can provide different user interfaces when it is fixed at a location around the desk, which is the first point in the child's room, and when it is fixed at a location around the bed, which is the second point, so that the display device 100 can configure and provide a user interface that matches the user's intention even within the space.

According to another embodiment, as described above, even if there is no pre-registered point for a given space, the display device 100 can provide a different user interface configuration when it is located in the center area or the periphery of the space and when it is located in the boundary area within the space.

In the above-described embodiments, the display device 100 may predict whether the display device 100 will continue to move, whether it will move to another space, etc., by referring to the user's voice or the motion data of the display device 100, and may provide a user interface that is more simplified than the user interface provided in FIGS. 8 to 16 described above, based on the predicted result. The 'simplification' may refer to providing only a part of the full user interface or indicating a simple version (e.g., consisting of only text) in the case of moving to another space or when movement is expected to be very strong.

In the above, when a movement exceeding a predetermined threshold is detected when the display device 100 moves within the space or between spaces, the display device 100 may temporarily suspend the playback of the content currently being played. For example, the display device 100 may be controlled to provide the simplified version of the user interface described above when moving within the first speed (acceleration) based on the movement speed or acceleration, and not provide the user interface when moving at a speed (acceleration) or higher.

The user interface provided on the screen of the display device 100 in FIGS. 8 to 16 may be, for example, an initial user interface screen when provided in the corresponding space. Accordingly, although not shown, the screen of the user interface may be changed and provided later according to the user's selection, etc. In addition, the user's selection may be referenced in the initial user interface configuration for the corresponding space later through learning.

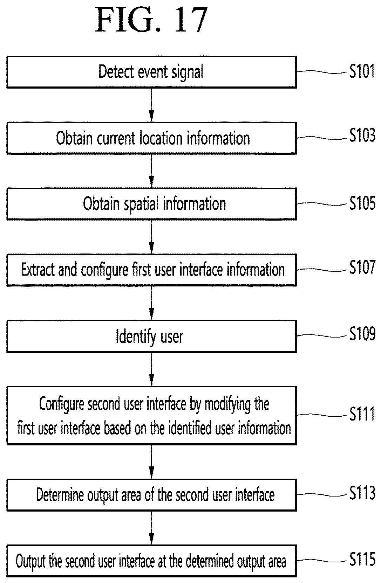

Referring to FIG. 17, the operation method of the display device 100 according to one embodiment of the present disclosure is described as follows.

The controller 170 may detect an event signal (S101).

When an event signal is detected in S101, the controller 170 can obtain the location information of the current display device 100 (S103).

The controller 170 can obtain the space information to which the current display device 100 belongs based on the obtained location information (S105).

The controller 170 can extract information about the first user interface from the DB and configure the user interface based on the obtained space information to which the display device 100 belongs (S107).

The controller 170 can identify the user who is in the vicinity of the current display device 100 after the start or completion of the configuration of the first user interface (S109).

The controller 170 reads user interface information corresponding to (or mapped to) the user information from the DB based on the user information identified in the step S109, compares it with the configured first user interface, and configures a second user interface in which at least a portion is modified (S111).

The controller 170 can determine an output area within the display 180 of the second user interface configured through the step S111 (S113).

The controller 170 can output the second user interface on the output area determined through the step S113 (S115).

Here, the second user interface may mean, for example, including both the first menu 830 and the second and third menus 840, 850 of FIG. 8.

According to an embodiment, the output area within the display 180 of the user interface may be different from each other, particularly, the first menu 1410 and the second to third menus 1420.

According to an embodiment, the step S113 may be omitted, and in that case, the second user interface may be output to a preset area (or default area), i.e., a lower area of the display 180, as shown in FIGS. 8 to 13.

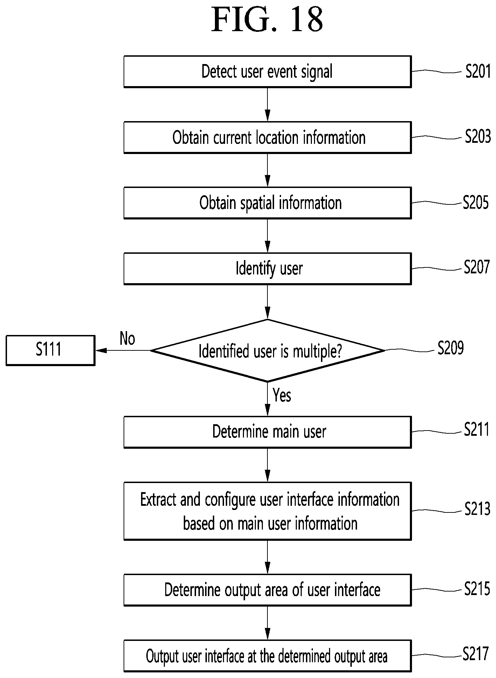

Referring to FIG. 18, the operation method of the display device 100 according to one embodiment of the present disclosure is described as follows.

FIG. 18 may be an operation method of the display device 100 when there are multiple identified users, unlike FIG. 17.

The controller 170 can detect an event signal for the display device 100 (S201).

When the event signal is detected, the controller 170 can obtain the current location information of the display device 100 (S203).

The controller 170 can obtain the space information to which the display device 100 currently belongs based on the obtained location information (S205).

The controller 170 can detect and identify a user around the display device 100 based on the obtained space information (S207).

At this time, the controller 170 can determine whether there are multiple users detected around the display device 100 in the step S207 (S209).

If there are multiple users detected around the display device 100 in the step S209, the controller 170 can determine (or identify) a main user for configuring the user interface (S211). Otherwise, the controller 170 can perform step S111 of the above-described FIG. 17.

The controller 170 can extract and configure information about the user interface from the DB based on the main user information determined in the step S211 (S213).

The controller 170 can determine an area to output the user interface configured in the step S213 (S215).

The controller 170 can output the configured user interface to the output area determined in the step S215 (S217).

According to an embodiment, in step S211, the controller 170 may determine a sub-user, i.e., a next-priority user, in advance. When the sub-user is determined, the controller 170 may extract and configure information about the user interface from the DB based on the sub-user information.

In the above process, the determination of the sub-user may be made, for example, based on movement prediction information of a user determined as the main user. The movement prediction information of the user may utilize a related public technology, and a detailed description thereof is omitted in this specification. For example, the controller 170 may predict information (motion data, audio data, etc.) about the main user detected through the camera sensor of the display device 100 or surrounding sensors based on a movement prediction model based on artificial intelligence technology.

Therefore, the sub-user may be determined through the above process when the main user is not interested in using the display device 100 or leaves the space to which the display device 100 belongs or the possibility of leaving is greater than a threshold value. The above 'not interested in use' may include cases where the user's gaze is away from the display 180 for a predetermined period of time, cases where the user is sleeping, cases where other devices are being used, etc. In this case, even if the main user does not leave the space and continues to stay there, the authority of the main user may be deprived, the sub-user may be determined, and the user interface may be reconfigured based on the determined sub-user to provide the service.

According to an embodiment, the sub-user may be determined together with the main user, and the user interface of the sub-user may also be provided when the user interface of the main user is provided. In this case, it may be particularly useful in the multi-view mode. In cases other than the multi-view mode, the user interface for the main user may be provided at the bottom of the screen, for example, as in FIG. 13, and the user interface for the sub-user may be provided at the side of the display 180, for example, as in FIG. 14(a). That is, the two user interfaces may be provided in an area determined so that at least some of them do not overlap each other. This means that even in the case of, for example, the horizontal mode of FIG. 5(a) and the vertical mode of FIG. 5(b), the controller 170 can control each user interface to always be provided in a fixed area regardless of the mode. That is, the user interface for the main user can be provided at the bottom of the screen in the horizontal mode and at the bottom of the screen in the vertical mode.

According to one embodiment of the present invention, the above-described method can be implemented as a code that can be read by a processor in a medium in which a program is recorded. Examples of the medium that can be read by a processor include a ROM, a RAM, a CD-ROM, a magnetic tape, a floppy disk, an optical data storage device, etc.

The display device described above is not limited to the configuration and method of the embodiments described above, and the embodiments can be configured by selectively combining all or part of each embodiment so that various modifications can be made.

### [Industrial Applicability]

According to the display device according to the present disclosure, the usability of the device can be maximized by configuring and providing an adaptive user interface considering the relationship with various external devices that can be connected to space, users, and usability, so that the display device has industrial applicability.

## Claims

1. A display device comprising:
a memory;
a sensor module configured to obtain location information of the display device; and
a controller configured to obtain information about a space to which the display device belongs from the obtained location information, detect a user around the display device in the space, read usability analysis information about the display device from the memory based on the obtained space information and the detected user information, and control at least a part of a user interface currently being provided through a display to be changed based on the read usability analysis information.

2. The display device of claim 1, wherein the controller is configured to identify the space based on the obtained location information and pre-written map information.

3. The display device of claim 2, wherein the controller is configured to detect an external device connectable in the space, and identify the space based on a type of the detected external device.

4. The display device of claim 1, wherein the controller is configured to identify the detected user by comparing the user information logged into the display device with the detected user information.

5. The display device of claim 1, wherein the controller is configured to assign a weight or predefine a priority to the space, and assign a weight or predefine a priority to a detectable user in the space.

6. The display device of claim 5, wherein the controller is configured to perform usability analysis based on the weight or priority for the space and the user.

7. The display device of claim 1, wherein the controller is configured to control the user interface currently provided, including the home menu bar, to be partially changed so that the user interface further includes content information currently being played and content information according to a recently watched list in the corresponding space.

8. The display device of claim 7, wherein the controller is configured to control the arrangement or exposure priority of applications in the home menu bar in the user interface currently being provided to be differently changed based on the corresponding space information or the usability analysis information.

9. The display device of claim 1, wherein when there are multiple detected users, the controller is configured to determine a main user in the corresponding space and control a part of the user interface currently being provided to be changed according to the determined main user.

10. The display device of claim 1, wherein when there are multiple detected users, the controller is configured to apply a group mode and control a part of the user interface currently being provided to be changed according to the group mode.

11. The display device of claim 1, wherein the controller is configured to control a display mode to be changed based on the spatial information.

12. The display device of claim 11, wherein when the display mode is changed, the controller is configured to control the configuration and arrangement of the user interface differently according to the changed display mode.

13. The display device of claim 1, wherein when the display device is moving, the controller is configured to detect a moving speed and determine whether or not to provide the user interface according to the detected moving speed.

14. The display device of claim 1, further comprising:
a shaft connected to the display and extending vertically; and
a stand base connected to the lower end of the shaft.

15. A method for operating a display device comprising:
detecting an event signal;
obtaining current location information of the display device according to the detected event signal, and
obtaining spatial information based on the obtained location information;
identifying a user around the display device;
obtaining usability analysis information based on the obtained spatial information and the identified user information; and
changing and outputting a part of a user interface currently being provided based on the obtained usability analysis information.
